(19) Europäisches Patentamt
European Patent Office
Office européen des brevets

(11) **EP 1 802 021 A1**

(12) **EUROPEAN PATENT APPLICATION**
published in accordance with Art. 158(3) EPC

(43) Date of publication:
   **27.06.2007 Bulletin 2007/26**

(51) Int Cl.:
   *H04L 1/16* (2006.01)   *H04L 29/08* (2006.01)

(21) Application number: **05799292.7**

(22) Date of filing: **26.10.2005**

(86) International application number:
   **PCT/JP2005/019660**

(87) International publication number:
   **WO 2006/046586 (04.05.2006 Gazette 2006/18)**

(84) Designated Contracting States:
   **AT BE BG CH CY CZ DE DK EE ES FI FR GB GR HU IE IS IT LI LT LU LV MC NL PL PT RO SE SI SK TR**

(30) Priority: **28.10.2004 JP 2004313975**

(71) Applicant: **MATSUSHITA ELECTRIC INDUSTRIAL CO., LTD.**
   **Osaka 571-8501 (JP)**

(72) Inventors:
   • **NISHIO, Akihiko,**
   **Matsushita Electric Ind. Co.,Ltd.**
   **Shiromi 1 chome,**
   **Chuo-ku,Osaka-shi,**
   **Osaka 540-6319 (JP)**

   • **HORIUCHI, Ayako,**
   **Matsushita Electric Ind. Co.,Ltd.**
   **Shiromi 1 chome,**
   **Chuo-ku,Osaka-shi,**
   **Osaka 540-6319 (JP)**

   • **SEIDEL, Eiko,**
   **Panasonic R&D Center Germany GMBH**
   **63225 Langen (DE)**

(74) Representative: **Grünecker, Kinkeldey, Stockmair & Schwanhäusser Anwaltssozietät**
   **Maximilianstrasse 58**
   **80538 München (DE)**

(54) **DATA COMMUNICATION APPARATUS, DATA RECEIVING APPARATUS, DATA TRANSMITTING APPARATUS, AND RETRANSMITTAL CONTROL METHOD**

(57)    A data communication apparatus, a data receiving apparatus, a data transmitting apparatus and a retransmission control method wherein the transmission efficiency is improved. The data communication apparatus includes an error rate determining part (120) and an ACK/NACK generating part (122). The error rate determining part (120) determines the packet error rate of received packet data. The ACK/NACK generating part (122) compares the determined packet error rate with a desired packet error rate that is a target value. As a result of the comparison, if the determined packet error rate is lower than the desired packet error rate, the ACK/NACK generating part (122) generates an ACK signal as a process of avoiding any data retransmission.

FIG.1

**Description**

Technical Field

The present invention relates to data communication apparatus, data receiving apparatus, data transmitting apparatus, and retransmission control method.

Background Art

In recent years, looking toward next-generation mobile communication systems, studies have been conducted on various high-speed packet transmission schemes capable of achieving data rates in excess of 100 Mbps, for example. In high-speed packet transmission, the ARQ (Automatic Repeat reQuest) scheme can be used as an error control technique. In the ARQ scheme of prior art, the receiving side judges whether or not a received packet bit error exists and feeds back to the transmitting side a NACK signal (negative acknowledgement signal) as a retransmission request signal if an error is detected or an ACK signal (positive acknowledgement signal) if an error is not detected. Upon receiving of a NACK signal (or upon non-receiving of anACK signal), the transmitting side retransmits the previously transmitted packet (see, for example, Non-Patent Document 1). In addition, inARQ, a retransmission upper limit count, i.e., a maximum retransmission count, is set. Possible ways of setting a maximum retransmission count include setting a retransmission count in accordance with channel quality (see, for example, Patent Document 1). Furthermore, the ACK signal and NACK signal are generally defined as "acknowledgement signals".
Patent Document 1: Japanese Patent Application Laid-Open No. HEI 1-54839.
Non-Patent Document 1: "Mobile Communications", H. Sasaoka, Ohmsha, Ltd., pp. 236 to 237.

Disclosure of Invention

Problems to be solved by the invention

Nevertheless, in the ARQ scheme of prior art, retransmission is performed if an error is detected within the maximum retransmission count. Thus, when data of media with relatively high required error rates, such as speech data or video data, is packetized and transmitted, more unnecessary retransmissions are performed as the actual packet error rate becomes excessively lower than the required packet error rate. While this can be prevented in the ARQ scheme of prior art by appropriately setting the maximum retransmission count, the channel characteristics vary from moment to moment in a mobile communication system, making it difficult to always set the appropriate maximum retransmission count. Thus, the ARQ scheme of prior art performs unnecessary retransmissions, thereby decreasing transmission efficiency.
The present invention has been implemented taking into account the problems described above, and it is an object of the present invention to provide a data communication apparatus, data receiving apparatus, data transmitting apparatus, and retransmission control method that enable transmission efficiency improvement.

Means for Solving the Problem

A data communication apparatus according to the present invention employs a configuration having: an acquisition section that acquires a received error rate of data; a comparison section that compares the acquired received error rate with a target value; and a processing section that performs processing to avoid data retransmission when the acquired received error rate is lower than the target value as a result of the comparison in the comparison section.
A retransmission control method according to the present invention has: an acquisition step of acquiring a received error rate of data; a comparison step of comparing the acquired received error rate with a target value; and a processing step of performing processing to avoid data retransmission when the acquired received error rate is lower than the target value as a result of the comparison in the comparison step.

Advantageous Effect of the Invention

The present invention can improve transmission efficiency.

Brief Description of Drawings

FIG.1 is a block diagram showing the configuration of amobile station according to Embodiment 1 of the present invention;

FIG.2 is a flowchart for explaining the acknowledgement signal generation operation according to Embodiment 1 of the present invention;

FIG.3 is a drawing for explaining the transmission/reception operation according to Embodiment 1 of the present invention;

FIG.4 is a block diagram showing the configuration of amobile station according to Embodiment 2 of the present invention;

FIG.5 is a graph illustrating the corresponding relationship between SIR and BER according to Embodiment 2 of the present invention;

FIG.6 is a flowchart for explaining the acknowledgement signal generation operation according to Embodiment 2 of the present invention;

FIG.7 is a block diagram showing the configuration of a base station according to Embodiment 3 of the present invention;

FIG.8 is a flowchart for explaining the retransmission judgment operation according to Embodiment 3 of the present invention;

FIG.9 is a drawing for explaining the transmission/reception operation according to Embodiment 3 of the present invention;

FIG.10 is a block diagram showing the configuration of a base station according to Embodiment 4 of the present invention;

FIG.11 is a drawing showing the corresponding relationship between SIR and the error judgment rate according to Embodiment 4 of the present invention;

FIG.12 is a block diagram showing the configuration of a base station according to Embodiment 5 of the present invention;

FIG.13 is a block diagram showing the configuration of a base station according to Embodiment 6 of the present invention;

FIG.14 is a flowchart for explaining the retransmission judgment operation according to Embodiment 6 of the present invention; and

FIG.15 is a drawing for explaining the transmission/reception operation according to Embodiment 6 of the present invention;

Best Mode for Carrying Out the Invention

Embodiments of the present invention will now be described in detail with reference to the accompanying drawings.

(Embodiment 1)

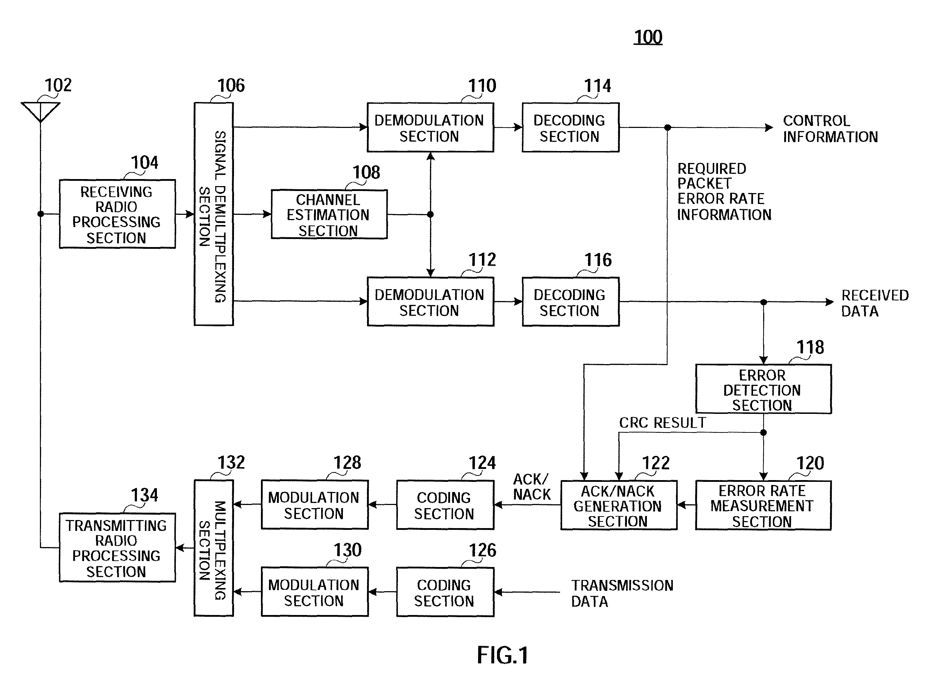

FIG. 1 is a block diagram showing the configuration of a mobile station apparatus (hereinafter "mobile station") which is equipped with the data communication apparatus according to Embodiment 1 of the present invention. Mobile station 100 according to the present embodiment is used as a data receiving apparatus and receives packet data transmitted from the base station apparatus (hereinafter "base station") used as a data transmitting apparatus. Further, mobile station 100 transmits a NACK signal when the mobile station requests retransmission of received packet data, or an ACK signal when the mobile station does not request retransmission of received packet data.

Mobile station 100 has antenna 102, receiving radio processing section 104, signal demultiplexing section 106, channel estimation section 108, demodulation sections 110, 112, error detection section 118, error rate measurement section 120, ACK/NACK generation section 122, coding sections 124, 126, modulation sections 128, 130, multiplexing section 132, and transmitting radio processing section 134.

Receiving radio processing section 104 receives the signal transmitted from a base station via antenna 102 and executes predetermined receiving radio processing such as down-conversion, A/D conversion, etc., on the received signal. The received signal subjected to receiving radio processing is output to signal demultiplexing section 106.

Signal demultiplexing section 106 demultiplexes a control channel, a data channel, and a pilot channel multiplexed on the received signal by using code multiplexing, time multiplexing, or frequency multiplexing, for example. Then, signal demultiplexing section 106 outputs control information of the control channel to demodulation section 110, a data signal of the data channel to demodulation section 112, and a pilot signal of the pilot channel to channel estimation section 108.

Channel estimation section 108 performs channel estimation using the input pilot signal. Demodulation section 110 demodulates the control information based on the result of channel estimation. Demodulation section 112 demodulates the data signal based on the result of channel estimation. Decoding section 114 decodes the demodulated control information Decoding section 116 decodes the demodulated data signal. The decoded data signal is output as received data.

Error detection section 118 performs error detection processing by CRC (Cyclic Redundancy Check), that is, detects errors in the received signal decoded in decoding section 116. Then error detection section 118 reports a result of the error detection processing (hereinafter referred to as "CRC result") to error rate measurement section 120 and ACK/NACK generation section 122.

Error rate measurement section 120, as a means of acquisition, acquires the received error rate. In addition, error rate measurement section 120 measures the packet error rate (PER) in the predetermined PER measurement period (for example, N frames) based on the CRC result. The measured PER is output to ACK/NACK generation section 122.

ACK/NACK generation section 122 acquires required PER information that indicates a required PER in the control information decoded by decoding section 114. The required PER has functions as the target value for the measured PER. Further, ACK/NACK generation section 122 generates either anACK signal or a NACK signal based on the measured PER, required PER, and CRC result, and outputs the signal to coding section 124. The ACK signal and NACK signal generation operation will be described later.

The data communication apparatus according to the present embodiment comprises error rate measurement section 120 and ACK/NACK generation section 122.

Coding section 124 encodes an input ACK signal or NACK signal. Coding section 126 encodes the transmission data. Modulation section 128 modulates the ACK or NACK signal encoded by coding section 124. Modulation section 130 modulates transmission data encoded by coding section 126. Multiplexing section 132 multiplexes the modulated ACK or NACK signal and the modulated transmission data by way of a multiplexing method, such as code multiplexing, time multiplexing, or frequency multiplexing. Transmitting radio processing section 134 executes predetermined transmitting radio processing such as D/A conversion and up-conversion, for example, on the multiplexed signal, and transmits the signal to a base station via antenna 102.

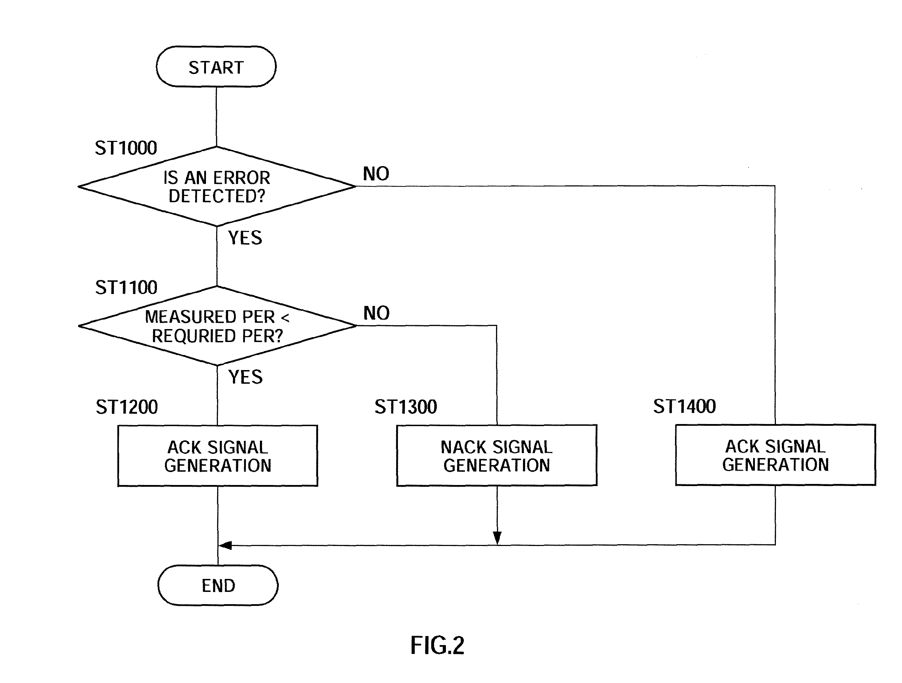

The acknowledgement signal generation operation of ACK/NACK generation section 122 will be described below. FIG.2 is a flowchart for explaining the acknowledgement signal generation operation of ACK/NACK generation section 122.

First, in step ST1000, whether or not an error is detected in the received signal is judged based on the CRC result. As a result of this judgment process, when an error is detected (ST1000: YES), the flow proceeds to step ST1100, and, when an error is not detected (ST1000: NO), the flow proceeds to step ST1400.

In step ST1100, as a means of comparison, the measurement PER is compared to the required PER. As a result of the comparison, when the measurement PER is lower than the required PER (ST1100: YES), the flow proceeds to step ST1200, and, when the measurement PER is greater than or equal to the required PER (ST1100: NO), the flow proceeds to step ST1300.

In step ST1200, as a processing means, processing to avoid data retransmission in the base station is performed. Specifically, as a request means, an ACK signal is generated and output to coding section 124. By this means, even when an error is detected in the received signal, the ACK signal is transmitted frommobile station 100 to the base station while transmission quality is in excessively good condition.

In step ST1300, as a request means, a NACK signal is generated and output to coding section 124. In step 1400, as a request means, an ACK signal is generated and output to coding section 124.

The order of processing in step ST1000 and ST1100 may be reverse to that described above.

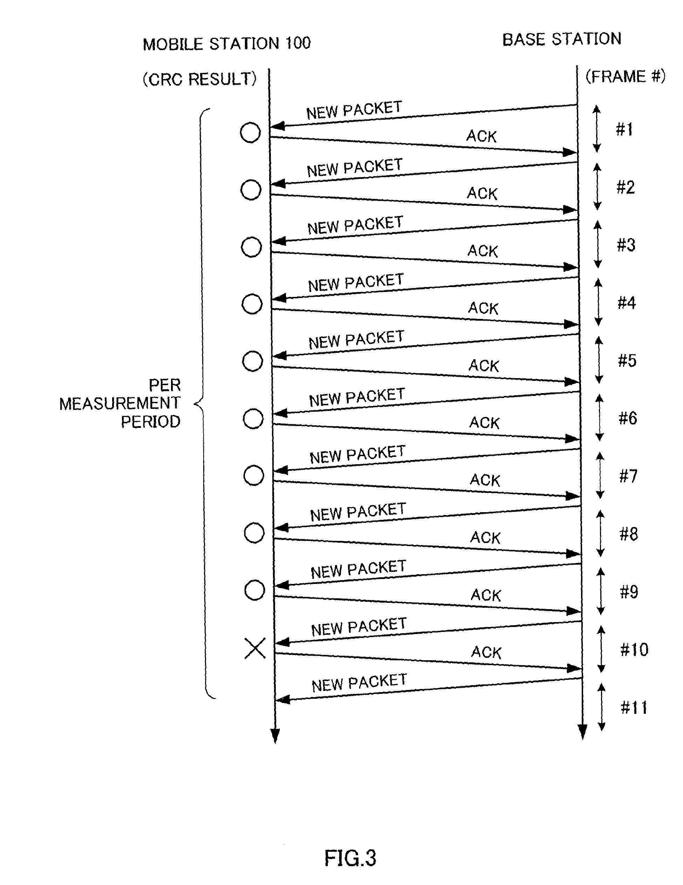

Next, the transmission/reception operation of mobile station 100 having the above-described configuration will be explained. FIG.3 is a drawing for explaining the transmission/reception operation of mobile station 100. Note that, in this illustration, the PER measurement period is set to 10 frames. In addition, the required PER is set to 0.15. In addition, In FIG.3, the "O" symbol indicates that an error is not detected in the received data in error detection processing, and the "X" symbol indicates that an error is detected in the received data in error detection processing.

First, new packet data of frame #1 is transmitted from the base station and received at mobile station 100. Since no errors is detected in the received data, mobile station 100 feeds back an ACK signal to the base station. The base station, receiving the ACK signal, transmits new packet data of frame #2. In this illustration, the above operation is repeated until frame #9.

Then, an error is detected in new packet data of frame #10 received at mobile station 100 from the base station. At this time, the measured PER of the PER measurement period is 0.10, which is lower than the required PER. Thus, mobile station 100 transmits to the base station anACK signal, not a NACK signal. As a result, the base station does not retransmit the same packet data as the packet data of frame #10 and transmits new packet data in frame #11.

In this manner, according to the present embodiment, mobile station 100 that transmits either an ACK signal or NACK signal in accordance with the error detection result of received packet data performs processing to avoid packet data retransmission when the measured PER is lower than the required PER, thereby enabling the base station to perform retransmission only when the measured PER is less than the required PER, avoiding excessive retransmission and improving transmission efficiency.

Further, although the present embodiment has been described using an example of a mobile station that generates and transmits NACK signals, the present invention can also be applied to mobile stations that do not generate NACK signals. In this case, when an error is detected and the measured PER is greater than or equal to the required PER, no acknowledgement signal is transmitted. This enables realization of an effect similar to the above in a mobile station that transmits an ACK signal when an error is not detected and does not transmit anything when an error is detected.

In addition, the present invention can also be applied to a mobile station that does not generate ACK signals. In this case, the mobile station does not transmit any acknowledgement signal when an error is not detected, or when an error is detected and the measured PER is lower than the required PER. This enables realization of an effect similar to the above in a mobile station that transmits a NACK signal when an error is detected and does not transmit anything when an error is not detected.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

(Embodiment 2)

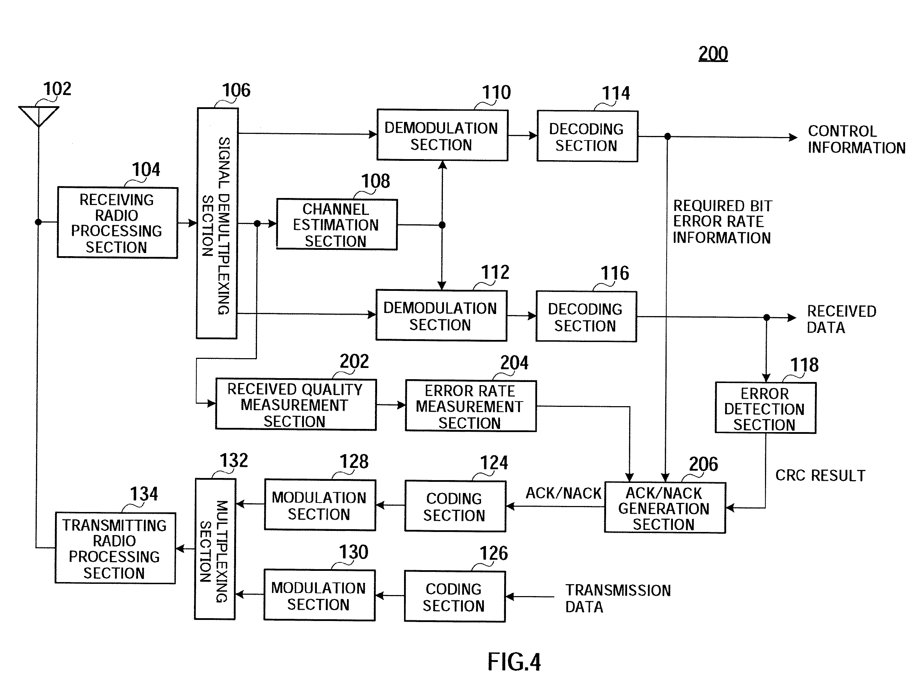

FIG. 4 is a block diagram showing the configuration of a mobile station equipped with the data communication apparatus according to Embodiment 2 of the present invention. Mobile station 200 according to the present embodiment is used as a data receiving apparatus and receives packet data transmitted from a base station used as a data transmitting apparatus. Mobile station 200 described in the present embodiment having the basic configuration similar to that of mobile station 100 described in Embodiment 1, and identical components will be assigned the same reference numerals and detailed explanations thereof will be omitted.

Mobile station 200 has a configuration that adds received quality measurement section 202 to the configuration of mobile station 100 and, in addition, provides error rate measurement section 204 and ACK/NACK generation section 206 in place of error rate measurement section 120 and ACK/NACK generation section 122.

Received quality measurement section 202 measures the received SIR (Signal to Interference Ratio) as the channel quality of the data channel. In addition, received quality measurement section 202 calculates the average value of the received SIRs (average received SIR) over the measurement period (for example, N frames). The calculated average received SIR is output to error rate measurement section 204. Error rate measurement section 204 estimates a bit error rate (BER) from the average received SIR and thereby measures BER. The measured BER is output to ACK/NACK generation section 206. In this way, the combination of received quality measurement section 202 and error rate measurement section 204, as an acquisition means, acquires a received error rate.

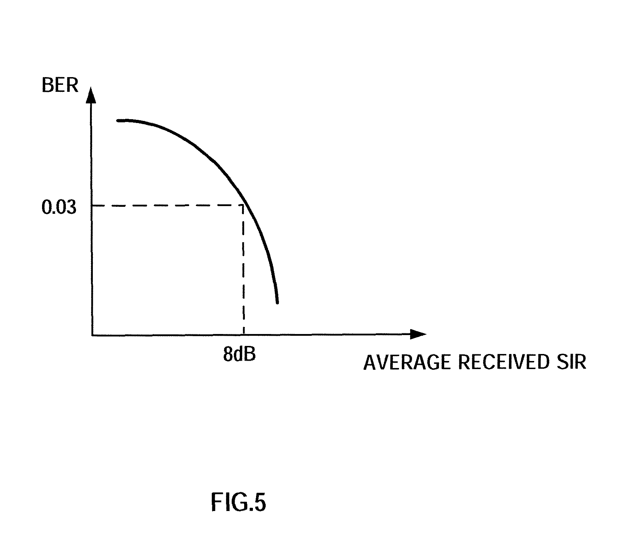

The above BER estimation is performed based on the corresponding relationship between the average received SIR and BER. This corresponding relationship is stored in advance in error rate measurement section 204. For example, assuming the case of the corresponding relationship shown in FIG.5, a BER value of 0.03 is output when the input average received SIR value is 8 dB.

ACK/NACK generation section 206 acquires the required BER information that indicates the required BER in the control information decoded by decoding section 114. The required BER functions as the target value for the measured BER. Further, ACK/NACK generation section 206 generates either an ACK signal or a NACK signal based on the measured BER, required BER, and CRC result, and outputs the signal to coding section 124. The ACK signal and NACK signal generation operation will be described later.

The data communication apparatus according to the present embodiment comprises received quality measurement section 202, error rate measurement section 204, and ACK/NACK generation section 206.

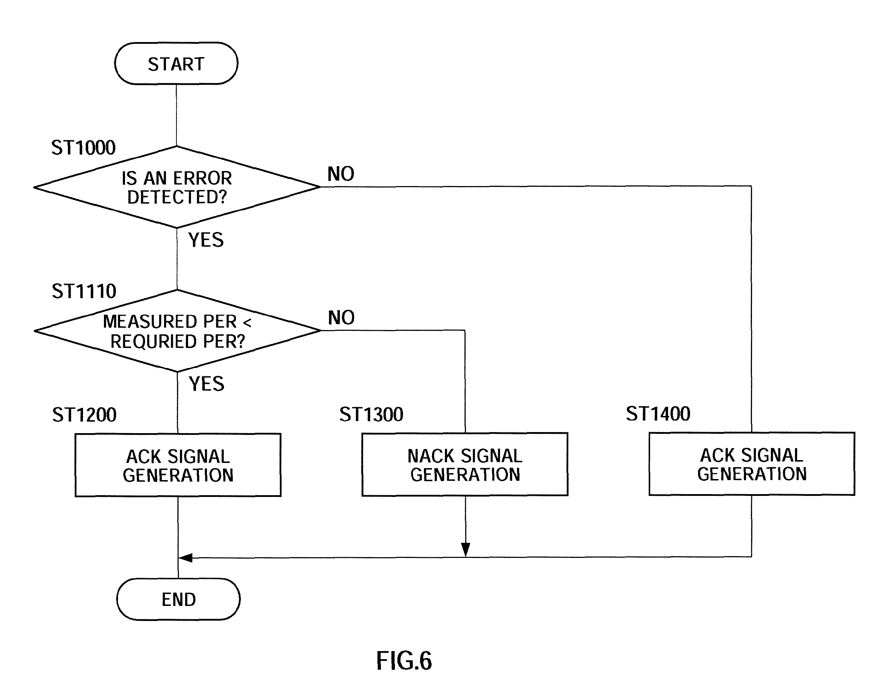

The acknowledgement signal generation operation of ACK/NACK generation section 206 will be described below. FIG. 6 is a flowchart for explaining the acknowledgement signal generation operation of ACK/NACK generation section 206.

As a result of the judgment process of the above-mentioned step ST1000, when an error is detected (ST1000: YES), the flow proceeds to step ST1110, and, when an error is not detected (ST1000: NO), the flow proceeds to step ST1400.

In step ST1110, as a means of comparison, the measured BER is compared to the required BER. As a result of the comparison, when the measured BER is lower than the required BER (ST1110: YES), the flow proceeds to the above step ST1200, and, when the measured BER is greater than or equal to the required BER (ST1100: NO), the flow proceeds to the above step ST1300.

The order of processing in step ST1000 and ST1110 may be reverse to that described above.

In this manner, according to the present embodiment, in case the target value of the received error rate is defined by BER, mobile station 200 that transmits either an ACK signal or a NACK signal in accordance with the error detection result of received packet data performs processing to avoid packet data retransmission when the measured BER is lower than the required BER, thereby enabling the base station to perform retransmission only when the measured BER is less than the required BER, avoiding excessive retransmission and improving transmission efficiency. Further, in comparison to PER, BER can be estimated with higher accuracy in a relatively short measurement period, thereby improving the responsiveness of retransmission control to received error rate variations.

Further, although the present embodiment has been described using an example of a mobile station that generates and transmits NACK signals, the present invention can also be applied to mobile stations that do not generate NACK signals. In this case, when an error is detected and the measured BER is greater than or equal to the required BER, no acknowledgement signal is transmitted. This enables realization of an effect similar to the above in a mobile station that transmits an ACK signal when an error is not detected and does not transmit anything when an error is detected.

In addition, the present invention can also be applied to a mobile station that does not generate ACK signals. In this case, when an error is not detected, and when an error is detected and the measured BER is lower than the required BER, no acknowledgement signal is transmitted. This enables an effect similar to the above in a mobile station that transmits a NACK signal when an error is detected and does not transmit anything when an error is not detected.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

(Embodiment 3)

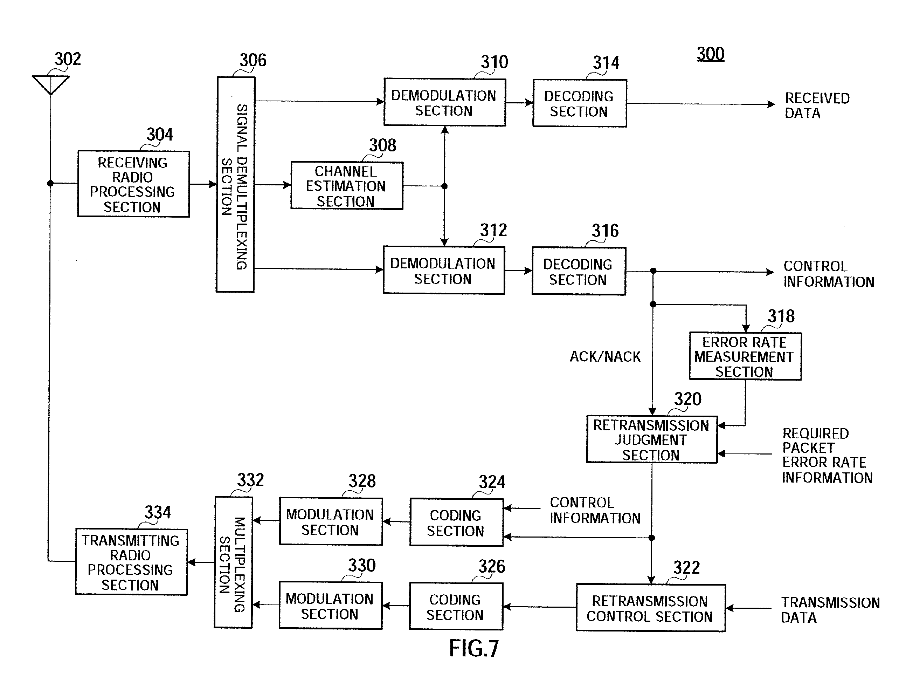

FIG. 7 is a block diagram showing the configuration of a base station equipped with the data communication apparatus according to Embodiment 3 of the present invention. Base station 300 according to the present embodiment is used as a data transmitting apparatus and transmits packet data to a mobile station apparatus used as a data receiving apparatus.

Base station 300 has antenna 302, receiving radio processing section 304, signal demultiplexing section 306, channel estimation section 308, demodulation sections 310, 312, decoding sections 314, 316, error rate measurement section 318, retransmission judgment section 320, retransmission control section 322, coding sections 324, 326, modulation sections 328, 330, multiplexing section 332, and transmitting radio processing section 334.

Receiving radio processing section 304 receives the signal transmitted from a mobile station via antenna 302, and executes predetermined receiving radio processing such as down-conversion and A/D conversion, for example, on the received signal. The received signal subjected to receiving radio processing is output to signal demultiplexing section 306.

Signal demultiplexing section 306 demultiplexes a control channel, a data channel, and a pilot channel multiplexed on the received signal by using code multiplexing, time multiplexing, or frequency multiplexing, for example. Then, signal demultiplexing section 306 outputs control information of the control channel to demodulation section 310, a data signal of the data channel to demodulation section 312, and a pilot signal of the pilot channel to channel estimation section 308.

Channel estimation section 308 performs channel estimation using the input pilot signal. Demodulation section 310 demodulates the data signal based on the result of channel estimation. Demodulation section 312 demodulates the control information based on the result of channel estimation. Decoding section 314 decodes the demodulated data signal. The decoded data signal is output as received data. Decoding section 316 decodes the demodulated control information.

Error rate measurement section 318, as a means of acquisition, acquires the received error rate of the mobile station. Specifically, error rate measurement section 318 measures the PER of the mobile station using the ACK signals and NACK signals fed back from the mobile station in decoded control information. The measured PER is output to retransmission judgment section 320.

Retransmission judgment section 320 receives a report of the required PER from the radio network control station. In addition, retransmission judgment section 320 acquires the ACK signals and NACK signals fed back from the mobile station in decoded control information. Retransmission judgment section 320 also makes retransmission judgment based on the measured PER, required PER, and ACK/NACK signals, and instructs retransmission control section 322 to perform either new packet transmission or packet retransmission. When the retransmission count of certain packet data exceeds a predetermined value (maximum retransmission count), the packet data is not retransmitted. The maximum retransmission count is determined in advance by the radio network control station based on how much delay can be tolerated. The retransmission judgment result is reported to coding section 324. The retransmission judgment operation will be described later in detail.

The data communication apparatus according to the present embodiment comprises error rate measurement section 318 and retransmission judgment section 320.

Retransmission control section 322 stores the transmission data. Upon receipt of packet retransmission instructions from retransmission judgment section 320, retransmission control section 322 outputs the stored transmission data as retransmission packet data, to coding section 326. Upon receipt of new packet transmission instructions from retransmission judgment section 320, retransmission control section 322 outputs new packet data to coding section 326.

Coding section 324 encodes control information in accordance with the result of the retransmission judgment. Coding section 326 encodes the packet data input from retransmission control section 322.

Modulation section 328 modulates the signal encoded in coding section 324. Modulation section 330 modulates the signal encoded in coding section 326. Multiplexing section 332 multiplexes the modulated signals modulated by modulation sections 328, 330 by way of a multiplexing method, such as code multiplexing, time multiplexing, or frequency multiplexing. Transmitting radio processing section 334 executes predetermined transmitting radio processing such as D/A conversion and up-conversion, for example, on the multiplexed signal, and transmits the signal to the mobile station via antenna 302.

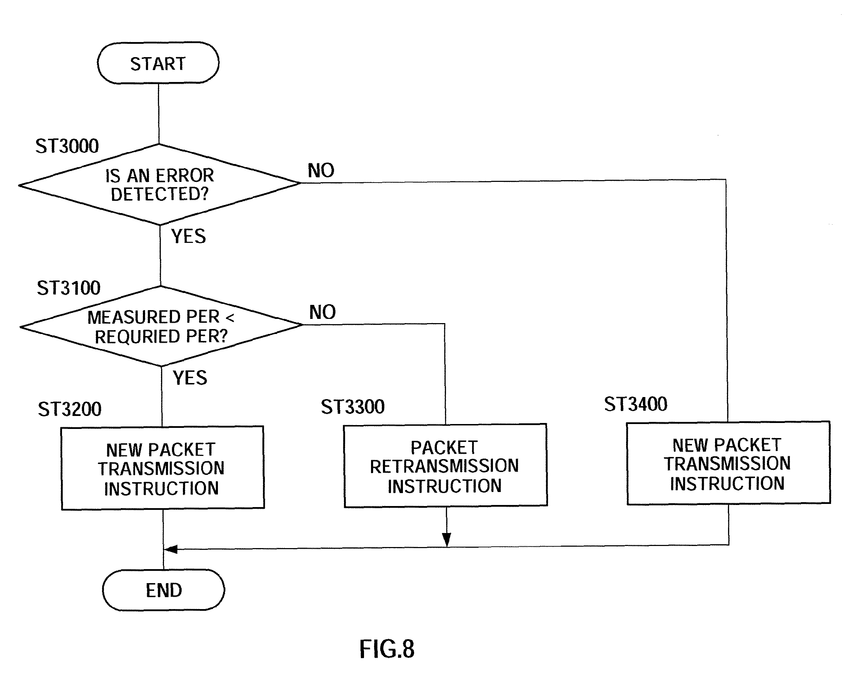

The retransmission judgment operation of retransmission judgment section 320 will be described below. FIG. 8 is a flowchart for explaining the retransmission judgment operation of retransmission judgment section 320.

First, in step ST3000, judgment is made as to whether or not an error is detected in received data in the mobile station based on whether the acknowledgement signal fed back from the mobile station is an ACK signal or a NACK signal. If the result of the judgment process indicates an error is detected (that is, a NACK signal is fedback, ST3000: YES), the flowproceeds to step ST3100, and, if the judgment process indicates that an error is not detected (that is, an ACK signal is fed back; ST3000: No), the flow proceeds to step ST3400.

In step ST3100, as a means of comparison, the measured PER is compared to the required PER. As a result of the comparison, when the measurement PER is lower than the required PER (ST3100: YES), the flow proceeds to step ST3200, and, when the measurement PER is greater than or equal to the requiredPER (ST3100: NO), the flowproceeds to step ST3300.

In step ST3200, as a processing means, processing to avoid data retransmission to the mobile station is performed. Specifically, decision is made to execute new packet retransmission, and retransmission control section 322 is instructed accordingly. By this means, even when an error is detected in the received signal of the mobile station, new packet data is transmitted from base station 300 to the mobile station while transmission quality is in excessively good condition.

In step ST3300, decision is made to execute packet retransmission, and retransmission control section 322 is instructed accordingly. In step ST3400, decision is made to execute new packet transmission, and retransmission control section 322 is instructed accordingly.

The order of the processing in steps ST3000 and ST3100 may be reverse to that described above.

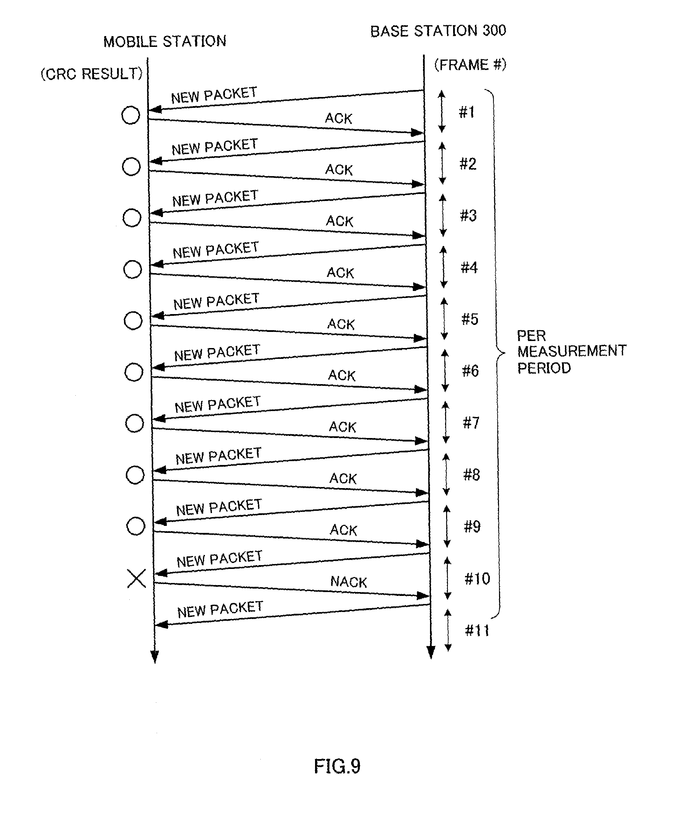

Next, the transmission/reception operation of base station 300 having the above configuration will be explained. FIG.9 is a drawing for explaining the transmission/reception operation of base station 300. Note that, in this illustration, the PER measurement period is set to 10 frames. In addition, the required PER is set to 0.15. In addition, In FIG.9, the "O" symbol indicates that an error is not detected in the received data in error detection processing, and the "X" symbol indicates that an error is detected in the received data in error detection processing.

First, new packet data of frame #1 is transmitted from base station 300 and received at the mobile station. Since no errors is detected in the received data, the mobile station feeds back an ACK signal to base station 300. Base station 300 receiving the ACK signal transmits new packet data of frame #2. In this illustration, the above operation is repeated until frame #9.

Then, when an error is detected in new packet data of frame #10 received at the mobile station from base station 300, and the mobile station feeds back a NACK signal to base station 300. At this time, the measured PER of the PER measurement period is 0.10, which is lower than the required PER. As a result, base station 300 does not retransmit the same packet data as the packet data of frame #10 and transmits new packet data in frame #11.

In this manner, according to the present embodiment, base station 300 that receives either an ACK signal or NACK signal from a mobile station performs processing to avoid packet retransmission when the measured PER is lower than the required PER, thereby enabling retransmission only when the measured PER is less than the required PER, avoiding excessive retransmission and improving transmission efficiency.

Further, although the present embodiment has been described using an example of a base station that receives NACK signals from a mobile station, the present invention can also be applied to base stations that do not receive NACK signals from a mobile station. In this case, error rate measurement section 318 measures the PER using the ACK signal fed back from the mobile station. In addition, retransmission judgment section 320 judges that an error is detected, when an ACK signal is not fed back from the mobile station. In this manner, a base station that receives onlyACK signals from a mobile station can realize the same effect as described above.

The present invention can also be applied to a base station that does not receive ACK signals from a mobile station. In this case, error rate measurement section 318 measures the PER using the NACK signal fed back from the mobile station. In addition, retransmission judgment section 320 judges that an error is not detected, when a NACK signal is not fed back from the mobile station. In this manner, a base station that receives only NACK signals from a mobile station can realize the same effect as described above.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

(Embodiment 4)

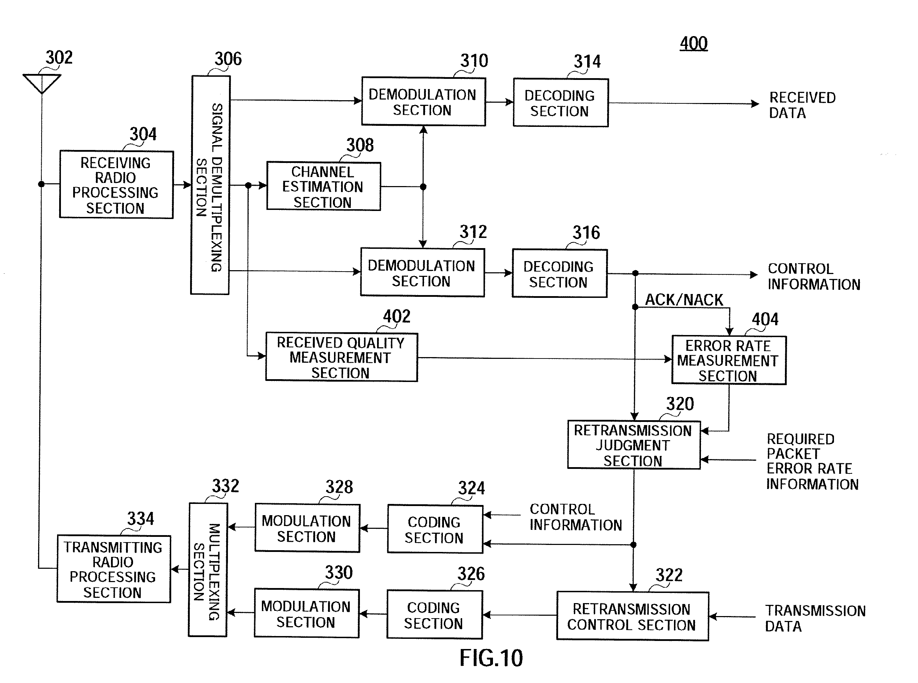

FIG.10 is a block diagram showing the configuration of base station 400 equipped with the data communication apparatus according to Embodiment 4 of the present invention. Base station 400 according to the present embodiment is used as a data transmitting apparatus and transmits packet data to a mobile station used as a data receiving apparatus. Base station 400 having a basic configuration similar to that of base station 300 described in Embodiment 3, and identical components will be assigned the same reference numerals and detailed explanations thereof will be omitted.

Base station 400 has a configuration that adds received quality measurement section 402 to the configuration of base station 300 and provides error rate measurement section 404 in place of error rate measurement section 318.

Received quality measurement section 402, using a pilot signal input from signal demultiplexing section 306, measures the received SIR of the channel in which the acknowledgement signal is transmitted and calculates the received SIR average value (average received SIR) in a predetermined period. The calculated average received SIR is output to error rate measurement section 404.

Error rate measurement section 404, as a means of acquisition, acquires the received error rate of the mobile station. Specifically, error rate measurement section 404 measures the PER of the mobile station using the ACK signals and NACK signals fed back from the mobile station in decoded control information.

Error rate measurement section 404, as a calculation means, also calculates the ACK error judgment rate andNACK error judgment rate based on the input average received SIR. Further, error rate measurement section 404 corrects the measured PER using the calculated ACK error judgment rate and NACK error judgment rate.

The data communication apparatus according to the present embodiment comprises received quality measurement section 402, error rate measurement section 404, and retransmission judgment section 320.

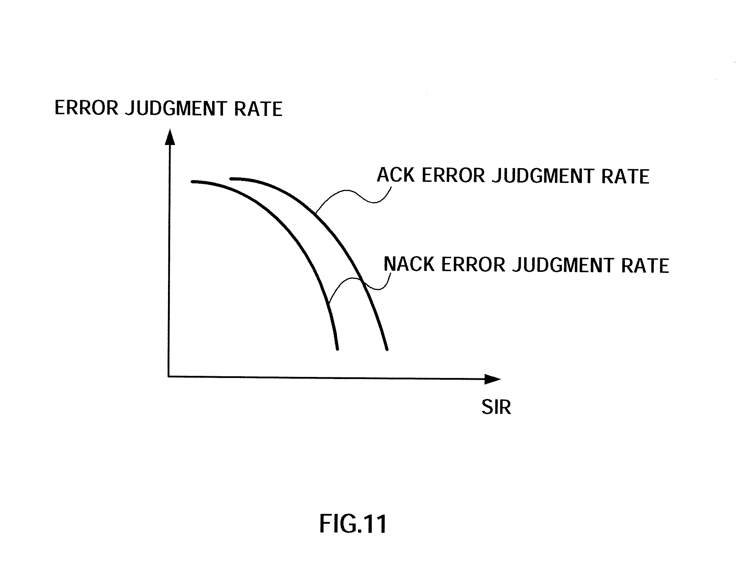

The calculation of the ACK error judgment rate and NACK error judgment rate of error rate measurement section 404 is performed based on the corresponding relationship between the average received SIR and error judgment rate. For example, the corresponding relationship shown in FIG.11 is stored in advance in error rate measurement section 404 and each error judgment rate is calculated based on this stored relationship. Further, the ACK error judgment rate is the probability an ACK signal is erroneously judged a NACK signal, and the NACK error judgment is the probability a NACK signal is erroneously judged as an ACK signal.

The correction of the measured PER in error rate measurement section 404 is performed according to the following equation 1 . In equation1, N is the total number of packets in the PER measurement period, $N_{NACK}$ is the number of NACK signals received during the PER measurement period, $N_{ACK}$ is the number of ACK signals received during the PER measurement period, $P_{NACK}$ is the NACK error judgment rate, and $P_{ACK}$ is the ACK error judgment rate.

$$PER = (N_{NACK} + N_{NACK} \times P_{NACK} - N_{ACK} \times P_{ACK}) / N$$

$$\cdots (Equation\ 1)$$

That is, in the above equation 1, the second element ($N_{NACK} \times P_{NACK}$) of the numerator indicates the number of times base station 400 erroneously receive a NACK signal transmitted from the mobile station for an ACK signal. For example, when $P_{NACK} = 0.1$ and $N_{NACK} = 100$, 10 NACK signals are received as ACK signals. Thus, in this case, 10 is added to $N_{NACK}$.

In addition, the third term ($N_{ACK} \times P_{ACK}$) of the numerator is the number of times base station 400 erroneously receive an ACK signal transmitted from the mobile station for a NACK signal. For example, when $P_{ACK} = 0.1$ and $N_{ACK} = 300$, 30 ACK signals are received as NACK signals. Thus, in this case, 30 is subtracted from $N_{NACK}$.

In this manner, the present embodiment can realize an effect similar to that described in Embodiment 3, and, in addition, improves the PER measurement accuracy in a system where ACK signal or NACK signal error judgment rates vary.

Further, although the present embodiment has been described using an example of a base station that receives NACK signals from a mobile station, the present invention can also be applied to base stations that do not receive NACK signals from a mobile station. In this case, error rate measurement section 404 measures PER using the ACK signal fed back from the mobile station. In addition, the ACK error judgment rate is calculated based on the average received SIR, and the measured PER is corrected using the calculated ACK error judgment rate.

Furthermore, retransmission judgment section 320 judges that an error is detected when an ACK signal is not fed back from the mobile station. In this manner, a base station that receives only ACK signals from a mobile station can realize the same effect as described above.

The present invention can also be applied to a base station that does not receive ACK signals from a mobile station. In this case, error rate measurement section 404 measures PER using the NACK signal fed back from the mobile station. In addition, the NACK error judgment rate is calculated based on the average received SIR, and the measured PER is corrected using the calculated NACK error judgment rate. Furthermore, retransmission judgment section 320 judges that an error is not detected when a NACK signal is not fed back from the mobile station. In this manner, a base station that receives only NACK signals from a mobile station can realize the same effect as described above.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

(Embodiment 5)

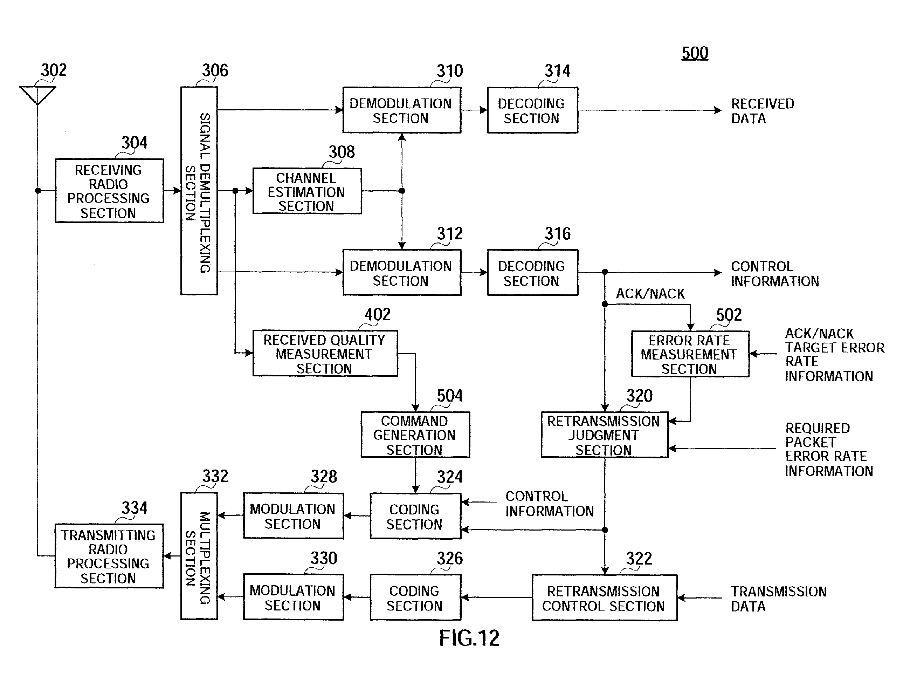

FIG.12 is a block diagram showing the configuration of a base station equipped with the data communication apparatus according to Embodiment 5 of the present invention. Base station 500 according to the present embodiment is used as a data transmitting apparatus and transmits packet data to a mobile station used as a data receiving apparatus. Base station 500 having a basic configuration similar to that of base station 300 described in Embodiment 3, and identical components will be assigned the same reference numerals and detailed explanations thereof will be omitted.

In the present embodiment, a case will be assumed where a channel in which ACK signals and NACK signals are transmitted from a mobile station is subjected to transmission power control.

Base station 500 has a configuration that provides error rate measurement section 502 in place of error rate measurement section 318, and adds command generation section 504 and received quality measurement section 402 described in Embodiment 4 to the configuration of base station 300.

Error rate measurement section 502, as a means of acquisition, acquires the received error rate of the mobile station. Specifically, error rate measurement section 502 measures the PER of the mobile station using the ACK signals and NACK signals fed back from the mobile station in decoded control information.

In addition, error rate measurement section 502 receives a report of ACK/NACK target error rate information that indicates the predetermined ACK error judgment rate and the predetermined NACK error judgment rate. Then, error rate measurement section 502 corrects the measured PER using the ACK error judgment rate and NACK error judgment rate. The specific correction method of the measured PER is the same as that used by error rate measurement section 404 described in Embodiment 4.

A data communication apparatus according to the present embodiment comprises error rate measurement section 502 and retransmission judgment section 320.

Command generation section 504 compares the average received SIR calculated by received quality measurement section 402 with the predetermined target SIR. Then, a transmission power control command is generated in accordance with the comparison result. That is, the transmission power control command is a signal for controlling the transmission power of the mobile station so that the average received SIR satisfies the target SIR. The transmission power control command may simply indicate an increase or decrease in transmission power, or the width of increase or decrease. Further, the target SIR is preset based on the ACK error judgment rate and NACK error judgment rate indicated in ACK/NACK target error rate information.

In this manner, according to the present embodiment, the same effect as that described in Embodiment 3 can be realized. Further, by the transmission power control of the transmission channels for of the ACK/NACK signals, the PER measurement accuracy can be improved in a system where the actual ACK error judgment rate and actual NACK error judgment rate virtually match predetermined values -- or in other words, in a system where the ACK error judgment rate and NACK error judgment rate are virtually consistent.

Further, although the present embodiment has been described using an example of a base station that receives NACK signals from a mobile station, the present invention can also be applied to base stations that do not receive NACK signals from a mobile station. In this case, error rate measurement section 502 measures PER using the ACK signals fed back from the mobile station. In addition, the measured PER is corrected using the predetermined ACK error judgment rate. Furthermore, retransmission judgment section 320 judges that an error is detected when an ACK signal is not fed back from the mobile station. In this manner, a base station that receives only ACK signals from a mobile station can realize the same effect as described above.

The present invention can also be applied to base stations that do not receive ACK signals from a mobile station. In this case, error rate measurement section 502 measures PER using the NACK signals fed back from the mobile station. In addition, the measured PER is corrected using the predetermined NACK error judgment rate. Furthermore, retransmission judgment section 320 judges that an error is not detected when a NACK signal is not fed back from the mobile station. In this manner, a base station that receives only NACK signals from a mobile station can realize the same effect as described above.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

(Embodiment 6)

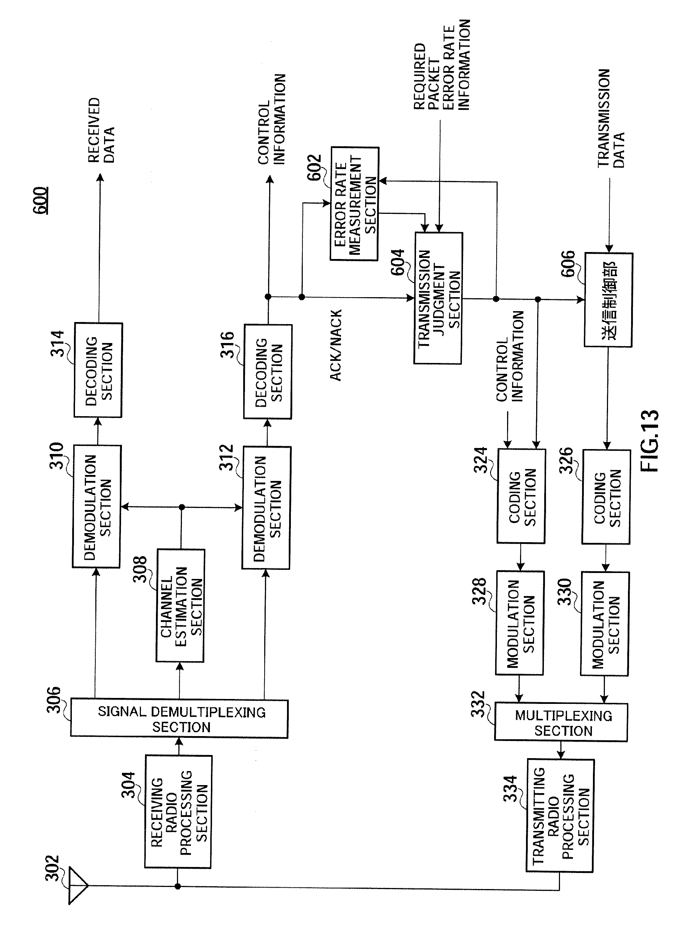

FIG.13 is a block diagram showing the configuration of a base station equipped with the data communication apparatus according to Embodiment 6 of the present invention. Base station 600 according to the present embodiment is used as a data transmitting apparatus and transmits packet data to a mobile station used as a data receiving apparatus. Base station 600 having a basic configuration similar to that of base station 300 described in Embodiment 3, and identical components will be assigned the same reference numerals and detailed explanations thereof will be omitted.

Base station 600 has a configuration that provides error rate measurement section 602, transmission judgment section 604, and transmission control section 606, in place of error rate measurement section 318, retransmission judgment section 320, and retransmission control section 322.

Error rate measurement section 602, as a means of acquisition, acquires the received error rate of the mobile station. Specifically, error rate measurement section 602 uses the ACK signals and NACK signals fed back from the mobile station in decoded control information and, when a new packet drop is reported from transmission judgment section 604, counts the new packet drop as a packet error, and measures the PER of the mobile station. That is, PER is calculated according to the following equation 2. In equation 2, N is the total number of packets in the PER measurement period, $N_{NACK}$ is the number of NACK signals received during the PER measurement period, and $N_{DROP}$ is the number of new packets dropped during the PER measurement period.

$$PER = (N_{NACK} + N_{DROP}) / N \quad \cdots (Equation\ 2)$$

Transmission judgment section 604 receives a report of the required PER from the radio network control station. In addition, retransmission judgment section 604 acquires the ACK signal and NACK signal fed back from the mobile station in decoded control information. Transmission judgment section 604 also makes transmission judgment based on the measured PER, required PER, and ACK/NACK signal, and instructs transmission control section 606 to perform new packet transmission, new packet drop or packet retransmission. When the retransmission count of certain packet data exceeds a predetermined value (maximum retransmission count), the packet data is not retransmitted. The maximum retransmission count is determined in advance by the radio network control station, based on how much delay can be tolerated. The result of the transmission judgment is reported to coding section 324 and error rate measurement section 602. The details of the transmission judgment operation will be described later.

The data communication apparatus according to the present embodiment comprises error rate measurement section 602 and transmission judgment section 604.

Transmission control section 606 stores the transmission data. Upon receipt of packet retransmission instructions from transmission judgment section 604, transmission control section 606 outputs the stored transmission data as retransmission packet data, to coding section 326. Upon receipt of new packet transmission instructions from transmission judgment section 604, transmission control section 606 outputs new packet data to coding section 326. In addition, upon receipt of instructions to drop the new packet from transmission judgment section 604, transmission control section 606 drops the new packet data and outputs the new packet data following the dropped new packet data, to coding section 326.

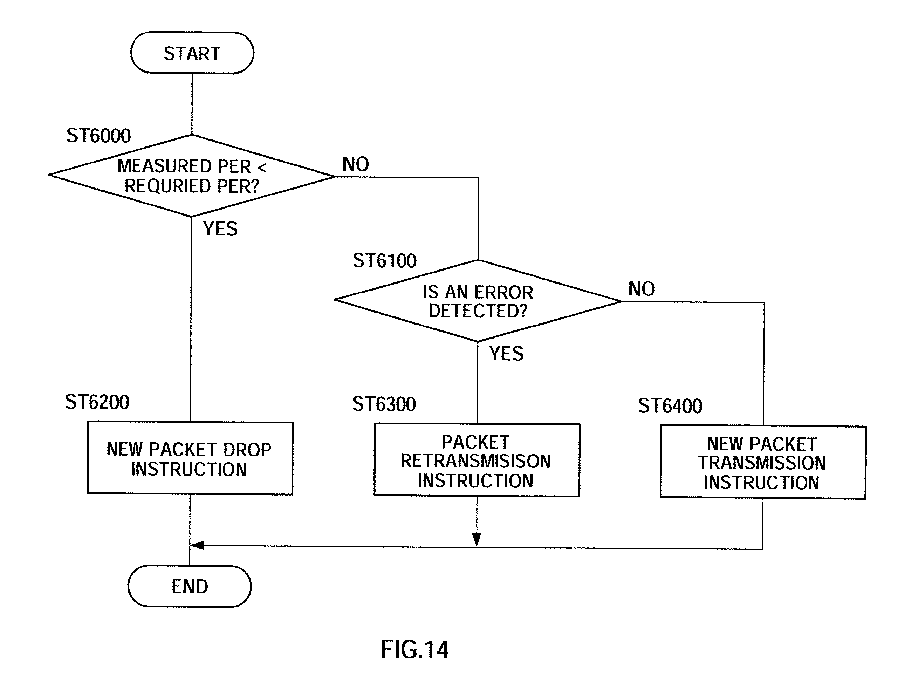

The transmission judgment operation of transmission judgment section 604 will be described below. FIG.14 is a flowchart for explaining the transmission judgment operation of transmission judgment section 604.

First, in step ST6000, as a means of comparison, the measured PER is compared to the required PER. As a result of the comparison, when the measurement PER is lower than the required PER (ST6000: YES), the flow proceeds to step ST6200, and, when the measurement PER is greater than or equal to the required PER (ST6000: NO), the flow proceeds to step ST6100.

In step ST6100, judgment is made as to whether or not an error is detected in the received data in the mobile station, based on whether the acknowledgement signal fed back from the mobile station is an ACK signal or a NACK signal. If the result of the judgment process indicates an error is detected (that is, a NACK signal is fed back, ST6100: YES), the flowproceeds to step ST6300, and, if the judgment process indicates that an error is not detected (that is, an ACK signal is fed back; ST6100: No), the flow proceeds to step ST6400.

In step ST6200, as a processing means, processing to avoid data retransmission to the mobile station is performed. Specifically, decision is made to drop the new packet, and transmission control section 606 is instructed accordingly. Simultaneously, the drop of new packet data is reported to error rate measurement section 602 and is counted as a packet error. As a result of this process, the new packet data is dropped, and the new packet data following the dropped new packet data is transmitted to the mobile station from base station 600.

In step ST6300, decision is made to execute packet retransmission, and transmission control section 606 is instructedaccordingly. InstepST6400, decision is made to execute new packet transmission, and transmission control section 606 is instructed accordingly.

The order of the processing in steps ST6000 and ST6100 may be reverse to that above described.

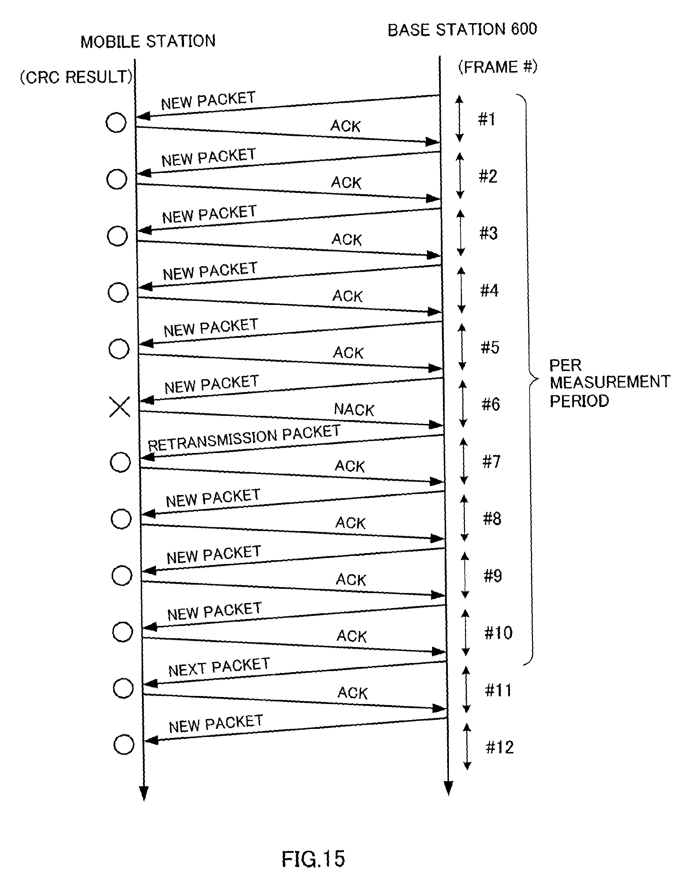

Next, the transmission/reception operation of base station 600 having the above configuration will be explained. FIG.15 is a drawing for explaining the transmission/reception operation of base station 600. Note that, in this illustration, the PER measurement period is set to 10 frames. In addition, the required PER is set to 0.15. In addition, in FIG. 15, the "O" symbol indicates that an error is not detected in received data in error detection processing, and the "X" symbol indicates that an error is detected in received data in error detection processing.

First, the new packet data of frame #1 are transmitted from base station 600 and received at the mobile station. Since no errors is detected in the received data, the mobile station feeds back an ACK signal to base station 600. Base station 600 that receiving the ACK signal transmits the new packet data of frame #2. In this illustration, the above operation is repeated until frame #5.

Then, when an error is detected in new packet data of frame #6 received at the mobile station from the base station 600, the mobile station feeds back a NACK signal to base station 600. Base station 600, receiving the NACK signal, retransmits in frame #7 the same packet data as the packet data of frame #6 (PER is not acquired yet so the conventional retransmission judgment operation is performed instead of the above-described transmission judgment operation).

The packet data is received by the mobile station correctly and an ACK signal is fed back to base station 600. Similarly, the packet data of frame #8, #9, and #10 are also received correctly and ACK signals are fed back to base station 600.

The measured PER obtained after the period of frames #1 to #10 is 0.10, which is lower than the required PER. Thus, base station 600, as a transmission process of frame #11, drops new packet data and transmits the next new packet data. The mobile station that receiving the packet data of frame #11 feeds back an ACK signal to base station 600, and, in response to this, base station 600 transmits new packet data in frame #12.

In this manner, according to the present embodiment, the transmission of packet data in excessive quality can be avoided in an environment where packet data errors rarely occur, thereby realizing an effect similar to that described in each of the above embodiments.

Further, although the present embodiment has been described using an example of a base station that receives NACK signals from a mobile station, the present invention can also be applied to base stations that do not receive NACK signals from a mobile station. In this case, error rate measurement section 602 measures PER using the ACK signal fed back from the mobile station. Furthermore, transmission judgment section 604 judges that an error is detected when an ACK signal is not fed back from the mobile station. In this manner, a base station that receives onlyACK signals from a mobile station can realize the same effect as described above.

The present invention can also be applied to a base station that does not receive ACK signals from a mobile station. In this case, error rate measurement section 602 measures PER using the NACK signals fed back from the mobile station. Furthermore, transmission judgment section 604 judges that an error is not detected when an NACK signal is not fed back from the mobile station. In this manner, a base station that receives only NACK signals from a mobile station can realize the same effect as described above.

In addition, although a case has been described with the present embodiment where a mobile station is used as the data receiving apparatus and a base station is used as the data transmitting apparatus, the present invention can also be applied to cases where a mobile station is used as the data transmitting apparatus and a base station is used as the data receiving apparatus.

This concludes a description of the embodiments of the present invention.

The data communication apparatus, data receiving apparatus, data transmitting apparatus, and retransmission control method according to the present invention are not limited to the above embodiments and may be implemented with various changes. For example, the embodiments can be appropriately combined and implemented.

Furthermore, while a case where the present invention is configured by hardware has been described as an example in the above embodiments, the present invention can be implemented by software. For example, the same kind of functions as those of data communication apparatus, data receiving apparatus, and data transmitting apparatus according to the present invention can be realized by writing algorithms of the retransmission control method according to the present invention in a programming language, storing this program in memory, and having it executed by an information processing means.

In the above embodiments, a base station may be indicated by "Node B" and a mobile station by "UE."

In addition, while the received quality of the data channel is measured using SIR in some of the above embodiments, the quality may also be measured using SNR, SINR, CIR, CNR, CINR, RSSI, received strength, received power, interference power, transmission rate, throughput, interference amount, or MCS, inplace of SIR. Furthermore, received quality is sometimes expressed as CQI (Channel Quality Indicator) or CSI (Channel Station Information).

Data channels in the above embodiments include, for example, in the 3GPP (3rd Generation Partnership Project) standard, HS-DSCH (High Speed Downlink Shared Channel), DSCH (Downlink Shared Channel), DPDCH (Dedicated Physical Data Channel), DCH (Dedicated Channel), S-CCPCH (Secondary Common Control Physical Channel), FACH (Forward Access Channel), and so forth. Control channels in the above embodiments include, for example, in the 3GPP standard, HS-SCCH (High Speed Shared Control Channel) accompanying HS-DSCH, HS-DPCCH (High Speed Dedicated Physical Control Channel), DCCH (Dedicated Control Channel) for reporting control information of RRM (Radio Resource Management), S-CCPCH (Secondary Common Control Physical Channel), P-CCPCH (Primary Common Control Physical Channel), PCH (Paging Channel), BCH (Broadcast Channel), and DPCCH (Dedicated Physical Control Channel) for physical channel control, and so forth.

Furthermore, the frames used in the descriptions of the above embodiments may also be expressed as subframes, slots, or blocks, etc.

The packet error rate used in the descriptions of the above embodiments may be expressed as a block error rate, and PER may be expressed as BLER.

Each function block employed in the description of each of the aforementioned embodiments may typically be implemented as an LSI constituted by an integrated circuit. These may be individual chips or partially or totally contained on a single chip.

"LSI" is adoptedhere but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application in biotechnology is also possible.

This application is based on Japanese Patent Application No.2004-313975 filed on October 28, 2004, the entire content of which is expressly incorporated herein by reference.

Industrial Applicability

The data communication apparatus, data receiving apparatus, data transmitting apparatus, and retransmission control method of the present invention can be applied to a base station apparatus ormobile station apparatus of a mobile communication system that employs error control technology such as the ARQ scheme or HARQ scheme, and so forth.

**Claims**

1. A data communication apparatus comprising:

   an acquisition section that acquires a received error rate of data;
   a comparison section that compares the acquired received error rate with a target value; and
   a processing section that performs processing to avoid data retransmission when the acquired received error rate is lower than the target value as a result of the comparison in the comparison section.

2. A data receiving apparatus comprising:

   a reception section that receives data transmitted from a data transmitting apparatus;
   a detection section that detects an error in the received data;
   a measurement section that measures a received error rate of the received data;

a comparison section that compares the measured received error rate with a target value; and
a requesting section that requests the data transmitting apparatus to retransmit the data when an error is detected in the received data and the measured received error rate is higher than the target value, and does not request the data transmitting apparatus to retransmit the data when an error is detected in the received data and the measured received error rate is lower than the target value.

3. The data reception apparatus according to claim 2, wherein the measurement section measures channel quality of a channel used for data transmission and estimates the received error rate based on the measured channel quality.

4. The data reception apparatus according to claim 2, wherein the measurement section measures channel quality of a channel used for data transmission and estimates the received error rate based on the measured channel quality.

5. A data transmitting apparatus comprising:

a transmission section that transmits data to a data receiving apparatus;
a measurement section that measures a received error rate of the data receiving apparatus; and
a comparison section that compares the measured received error rate with a target value,
wherein the transmission section retransmits the data to the data receiving apparatus when data retransmission is requested from the data receiving apparatus and the measured received error rate is higher than the target value, and does not retransmit the data to the data receiving apparatus when data retransmission is requested from the data receiving apparatus and the measured received error rate is lower than the target value.

6. The data transmission apparatus according to claim 5 further comprising:

a reception section that receives an ACK signal or a NACK signal; and
a calculation section that calculates an error judgment rate of the received ACK signal or NACK signal,
wherein the measurement section measures the received error rate using the received ACK signal or NACK signal, and corrects the measured received error rate with the calculated error judgment rate.

7. The data transmission apparatus according to claim 5, further comprising a reception section that receives an ACK signal or a NACK signal,
wherein the measurement section measures the received error rate using the received ACK signal or NACK signal, and corrects the measured received error rate with a predetermined error judgment rate of the ACK signal or NACK signal.

8. The data transmission apparatus according to claim 5, wherein:

the transmission section drops first new data and transmits second new data in place of the first new data, when the measured received error rate is lower than the target value; and
the measurement section counts the drop of the first new data as a data error to measure the received error rate.

9. A base station apparatus comprising the data communication apparatus according to claim 1.

10. A mobile station apparatus comprising the data communication apparatus according to claim 1.

11. A retransmission control method comprising:

an acquisition step of acquiring a received error rate of data;
a comparison step of comparing the acquired received error rate with a target value; and
a processing step of performing processing to avoid data retransmission when the acquired received error rate is lower than the target value as a result of the comparison in the comparison step.

FIG.1

EP 1 802 021 A1

START

ST1000    IS AN ERROR
          DETECTED?         NO

          YES

ST1100    MEASURED PER <
          REQURIED PER?     NO

          YES

ST1200                  ST1300                  ST1400
ACK SIGNAL              NACK SIGNAL             ACK SIGNAL
GENERATION             GENERATION             GENERATION

END

FIG.2

MOBILE STATION 100

BASE STATION

(CRC RESULT)

(FRAME #)

NEW PACKET

ACK

#1

NEW PACKET

ACK

#2

NEW PACKET

ACK

#3

NEW PACKET

ACK

#4

NEW PACKET

ACK

#5

PER
MEASUREMENT
PERIOD

NEW PACKET

ACK

#6

NEW PACKET

ACK

#7

NEW PACKET

ACK

#8

NEW PACKET

ACK

#9

NEW PACKET

ACK

#10

NEW PACKET

#11

FIG.3

FIG.4

EP 1 802 021 A1

FIG.5

```
                    ┌──────────┐
                    │  START   │
                    └────┬─────┘
                         │
                         │
  ST1000          ◇──────┴──────◇
              ╱  IS AN ERROR  ╲        NO
             ◇    DETECTED?    ◇──────────────────────────┐
              ╲               ╱                            │
                ◇───────┬───◇                             │
                        │                                 │
                       YES                                │
                        │                                 │
  ST1110          ◇─────┴──────◇                          │
              ╱  MEASURED PER < ╲        NO               │
             ◇  REQURIED PER?   ◇──────────┐             │
              ╲                 ╱           │             │
                ◇──────┬──────◇            │             │
                       │                    │             │
                      YES                   │             │
                       │                    │             │
  ST1200               │       ST1300       │    ST1400   │
   ┌───────────────────┴──┐  ┌──────────────┴───┐  ┌──────┴───────────┐
   │    ACK SIGNAL        │  │   NACK SIGNAL    │  │   ACK SIGNAL     │
   │    GENERATION        │  │   GENERATION     │  │   GENERATION     │
   └───────────────────┬──┘  └──────────┬───────┘  └──────┬───────────┘
                       │                 │                 │
                       │◄────────────────┴─────────────────┘
                       │
                  ┌────┴─────┐
                  │   END    │
                  └──────────┘
```

FIG.6

FIG.7

300

302

304 RECEIVING RADIO PROCESSING SECTION

306 SIGNAL DEMULTIPLEXING SECTION

308 CHANNEL ESTIMATION SECTION

310 DEMODULATION SECTION

312 DEMODULATION SECTION

314 DECODING SECTION → RECEIVED DATA

316 DECODING SECTION → CONTROL INFORMATION

318 ERROR RATE MEASUREMENT SECTION

320 RETRANSMISSION JUDGMENT SECTION

ACK/NACK

REQUIRED PACKET ERROR RATE INFORMATION

322 RETRANSMISSION CONTROL SECTION

TRANSMISSION DATA

324 CODING SECTION

326 CODING SECTION

CONTROL INFORMATION

328 MODULATION SECTION

330 MODULATION SECTION

332 MULTIPLEXING SECTION

334 TRANSMITTING RADIO PROCESSING SECTION

20

FIG.8

START

ST3000 — IS AN ERROR DETECTED?
NO / YES

ST3100 — MEASURED PER < REQURIED PER?
NO / YES

ST3200 — NEW PACKET TRANSMISSION INSTRUCTION

ST3300 — PACKET RETRANSMISSION INSTRUCTION

ST3400 — NEW PACKET TRANSMISSION INSTRUCTION

END

MOBILE STATION

BASE STATION 300

(CRC RESULT)

(FRAME #)

NEW PACKET
○
ACK
#1

NEW PACKET
○
ACK
#2

NEW PACKET
○
ACK
#3

NEW PACKET
○
ACK
#4

NEW PACKET
○
ACK
#5

NEW PACKET
○
ACK
#6
PER
MEASUREMENT
PERIOD

NEW PACKET
○
ACK
#7

NEW PACKET
○
ACK
#8

NEW PACKET
○
ACK
#9

NEW PACKET
✕
NACK
#10

NEW PACKET
#11

FIG.9

FIG.10

EP 1 802 021 A1

ERROR JUDGMENT RATE

FIG.11

FIG.12

600

302

304 RECEIVING RADIO PROCESSING SECTION

306 SIGNAL DEMULTIPLEXING SECTION

308 CHANNEL ESTIMATION SECTION

310 DEMODULATION SECTION

314 DECODING SECTION → RECEIVED DATA

312 DEMODULATION SECTION

316 DECODING SECTION → CONTROL INFORMATION

ACK/NACK

602 ERROR RATE MEASUREMENT SECTION

604 TRANSMISSION JUDGMENT SECTION

REQUIRED PACKET ERROR RATE INFORMATION

606 送信制御部

CONTROL INFORMATION

TRANSMISSION DATA

324 CODING SECTION

326 CODING SECTION

328 MODULATION SECTION

330 MODULATION SECTION

332 MULTIPLEXING SECTION

334 TRANSMITTING RADIO PROCESSING SECTION

FIG.13

```
                        ┌──────────┐
                        │  START   │
                        └──────────┘
                             │
ST6000                       │
                    ╱────────────────────╲        NO
                  ╱  MEASURED PER <         ╲─────────────────┐
                  ╲  REQURIED PER?          ╱                 │
                    ╲────────────────────╱                    │
                             │ YES                            │
                             │                        ST6100  │
                             │                  ╱──────────────────────╲     NO
                             │                ╱   IS AN ERROR            ╲──────────────┐
                             │                ╲   DETECTED?              ╱              │
                             │                  ╲──────────────────────╱               │
                             │                            │ YES                        │
ST6200                       │         ST6300             │             ST6400         │
    ┌──────────────────┐     │    ┌──────────────────┐    │    ┌──────────────────┐    │
    │ NEW PACKET DROP  │     │    │     PACKET       │    │    │   NEW PACKET     │    │
    │   INSTRUCTION    │     │    │  RETRANSMISISON  │    │    │  TRANSMISSION    │    │
    │                  │     │    │   INSTRUCTION    │    │    │   INSTRUCTION    │    │
    └──────────────────┘     │    └──────────────────┘    │    └──────────────────┘    │
                             │                            │                            │
                             │◄───────────────────────────┴────────────────────────────┘
                        ┌──────────┐
                        │   END    │
                        └──────────┘
```

FIG.14

MOBILE STATION

(CRC RESULT)

BASE STATION 600

(FRAME #)

NEW PACKET
○  ←————————————————
ACK
—————————————————→  #1

NEW PACKET
○  ←————————————————
ACK
—————————————————→  #2

NEW PACKET
○  ←————————————————
ACK
—————————————————→  #3

NEW PACKET
○  ←————————————————
ACK
—————————————————→  #4

NEW PACKET
○  ←————————————————
ACK
—————————————————→  #5

NEW PACKET
✕  ←————————————————
NACK
—————————————————→  #6

RETRANSMISSION PACKET
○  ←————————————————
ACK
—————————————————→  #7

NEW PACKET
○  ←————————————————
ACK
—————————————————→  #8

NEW PACKET
○  ←————————————————
ACK
—————————————————→  #9

NEW PACKET
○  ←————————————————
ACK
—————————————————→  #10

NEXT PACKET
○  ←————————————————
ACK
—————————————————→  #11

NEW PACKET
○  ←————————————————  #12

PER
MEASUREMENT
PERIOD

FIG.15

28

<table>
<tr><td colspan="2">**INTERNATIONAL SEARCH REPORT**</td><td colspan="2">International application No.<br>PCT/JP2005/019660</td></tr>
</table>

**A. CLASSIFICATION OF SUBJECT MATTER**
*H04L1/16*(2006.01), *H04L29/08*(2006.01)

According to International Patent Classification (IPC) or to both national classification and IPC

**B. FIELDS SEARCHED**

Minimum documentation searched (classification system followed by classification symbols)
*H04L1/16*(2006.01), *H04L29/08*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-064878 A (Mitsubishi Electric Corp.),<br>28 February, 2002 (28.02.02),<br>Par. Nos. [0021], [0126]<br>(Family: none) | 1,2,10,11<br>3,4 |
| X<br>Y | JP 06-152569 A (Nippon Telegraph And Telephone Corp.),<br>31 May, 1994 (31.05.94),<br>Par. Nos. [0013] to [0016]<br>(Family: none) | 1,2,10,11<br>3,4 |
| Y | JP 2002-044057 A (Sharp Corp.),<br>08 February, 2002 (08.02.02),<br>Par. Nos. [0019] to [0021], [0026]; Fig. 1<br>(Family: none) | 3,4 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>20 January, 2006 (20.01.06) | Date of mailing of the international search report<br>31 January, 2006 (31.01.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/019660 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 07-123079 A  (Toshiba Corp.),<br>12 May, 1995 (12.05.95),<br>Par. Nos. [0038], [0082]<br>(Family: none) | 5,9<br>6-8 |
| Y | JP 2004-040314 A  (Matsushita Electric<br>Industrial Co., Ltd.),<br>05 February, 2004 (05.02.04),<br>Par. No. [0071]<br>(Family: none) | 5,9 |
| A | JP 08-102727 A  (Kyocera Corp.),<br>16 April, 1996 (16.04.96),<br>Full text<br>(Family: none) | 6-8 |

Form PCT/ISA/210 (continuation of second sheet) (April 2005)

**EP 1 802 021 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1054839 A

- JP 2004313975 A

**Non-patent literature cited in the description**

- **H. SASAOKA.** Mobile Communications. Ohmsha, Ltd, 236-237